(19) Europäisches Patentamt
European Patent Office
Office européen des brevets

(11) EP 2 063 453 A1

(12) EUROPEAN PATENT APPLICATION

(43) Date of publication:
27.05.2009 Bulletin 2009/22

(51) Int Cl.:
H01J 63/02 (2006.01)          H01J 61/30 (2006.01)

(21) Application number: 08169420.0

(22) Date of filing: 19.11.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 21.11.2007 KR 20070119112

(71) Applicant: Samsung SDI Co., Ltd.
Suwon-si
Gyeonggi-do (KR)

(72) Inventors:
• Lee, Sang-Jin,
Samsung SDI Co., Ltd.
Suwon-si,
Gyeonggi-do (KR)
• Jun, Pil-Goo,
Samsung SDI Co., Ltd.
Suwon-si,
Gyeonggi-do (KR)
• Shin, Jong-Hoon,
Samsung SDI Co., Ltd.
Suwon-si,
Gyeonggi-do (KR)

• Jung, Kyu-Won,
Samsung SDI Co., Ltd.
Suwon-si,
Gyeonggi-do (KR)
• Ryu, Kyung-Sun,
Samsung SDI Co., Ltd.
Suwon-si,
Gyeonggi-do (KR)
• Lee, Jin-Ho,
Samsung SDI Co., Ltd.
Suwon-si,
Gyeonggi-do (KR)
• Kang, Su-Joung,
Samsung SDI Co., Ltd.
Suwon-si,
Gyeonggi-do (KR)

(74) Representative: Hengelhaupt, Jürgen et al
Gulde Hengelhaupt Ziebig & Schneider
Patentanwälte - Rechtsanwälte
Wallstrasse 58/59
10179 Berlin (DE)

(54) **Light emission device and display device using the light emission device as its light source**

(57) A light emission device capable of enhancing its luminance and durability and a display device utilizing the light emission device as a light source. The light emission device includes first (12) and second (14) substrates facing each other, cathode electrodes (26) arranged on the first substrate and extending in a first direction, gate electrodes (30) arranged above the cathode electrodes and extending in a second direction crossing the first direction, a plurality of electron emission regions (32) electrically coupled to the cathode electrodes, and a light emission unit provided on the second substrate and including an anode electrode and a phosphor layer (34). The first substrate has an active area and a non-active area surrounding the active area, and a total area of the electron emission regions on the first substrate is between about 2 and about 26% of the active area.

FIG.1

**Description**

**BACKGROUND OF THE INVENTION**

**1. Field of the Invention**

The present invention relates to a light emission device and a display device using the light emission device as its light source. More particularly, the present invention relates to an electron emission unit disposed in the light emission device and that emits electrons toward a phosphor layer.

**2. Description of the Related Art**

There are many different types of light emission devices that radiate visible light. Among these light emission devices, a particular type of light emission device includes a phosphor layer and an anode electrode that are disposed on a front substrate, and electron emission regions and driving electrodes that are disposed on a rear substrate. The front and rear substrates are sealed with each other at their periphery regions (or peripheries) using a sealing member, and the inner space between the front and rear substrates is exhausted to form a vacuum panel (or vacuum chamber).

Here, in this type of light emission device, the electron emission regions emit electrons toward the phosphor layer, and the electrons excite the phosphor layer to emit visible light. The anode electrode receives a high voltage of several thousand volts, and serves as an acceleration electrode that attracts electron beams to the phosphor layer.

The above light emission device may be used as a light source in a display device having a non-self emissive display panel, e.g., a liquid crystal display panel. In this case, the luminance of the light emission device should be enhanced (or increased) in order to compensate for the low transmittance of the display panel. In addition, the service life of the electron emission regions should be improved so as to uniformly maintain current density (electron emission amount) under a temporally long driving condition.

The above information disclosed in this Background section is only for enhancement of understanding of the background of the invention and therefore it may contain information that does not form the prior art that is already known in this country to a person of ordinary skill in the art.

**SUMMARY OF THE INVENTION**

Aspects of embodiments of the present invention are directed toward a light emission device that can realize high luminance and enhance durability by improving service life of electron emission regions, and a display device utilizing the light emission device as a light source.

According to an embodiment of the present invention, there is provided a light emission device including first and second substrates facing each other with a gap therebetween, cathode electrodes arranged on the first substrate and extending in a first direction, gate electrodes arranged above the cathode electrodes and extending in a second direction crossing the first direction with an insulation layer interposed between the cathode electrodes and the gate electrodes, a plurality of electron emission regions electrically coupled to the cathode electrodes, and a light emission unit on the second substrate and including an anode electrode and a phosphor layer. The first substrate has an active area and a non-active area surrounding the active area. A total area of the electron emission regions on the first substrate is between about 2 and about 26% of the active area.

The gap between the first and second substrates may be between about 5 and about 20mm. The anode electrode may receive an anode voltage between about 10 and about 15kV.

The gate electrodes and the insulation layer may have openings to partially expose a surface of the cathode electrodes, and the electron emission regions may be formed on the exposed surface of the cathode electrodes through the openings. A diameter of each of the openings may be about 60 $\mu$m or more, a diameter of each of the electron emission regions may be about 40 $\mu$m or more, and a pitch of the electron emission regions may be 80 $\mu$m or more.

According to another embodiment of the present invention, there is provided a display device including a display panel for displaying an image, and a light emission device for emitting light toward the display panel. The light emission device includes first and second substrates facing each other with a gap therebetween, cathode electrodes arranged on the first substrate and extending in a first direction, gate electrodes arranged above the cathode electrodes and extending in a second direction crossing the first direction with an insulation layer interposed between the cathode electrodes and the gate electrodes, a plurality of electron emission regions electrically coupled to the cathode electrodes, and a light emission unit on the second substrate and including an anode electrode and a phosphor layer. The first substrate has an active area and a non-active area surrounding the active area. A total area of the electron emission regions on the first substrate is between about 2 and about 26% of the active area.

The gap between the first and second substrates may be between about 5 and about 20mm. The anode electrode may receive an anode voltage between about 10 and about 15kV.

The gate electrodes and the insulation layer may have openings to partially expose a surface of the cathode electrodes, and the electron emission regions may be formed on the exposed surface of the cathode electrodes through the openings. A diameter of each of the openings may be about 60 $\mu$m or more, a diameter of each of the electron emission regions may be about 40 $\mu$m or more, and a pitch of the electron emission regions may be 80 $\mu$m or more.

The display panel may include first pixels, and the light emission device may include second pixels, the second pixels may be less in number than the first pixels. The luminance of each of the second pixels may be independently controlled in response to a highest gray level among gray levels of corresponding ones of the first pixels. The display panel may be a liquid crystal display panel.

## BRIEF DESCRIPTION OF THE DRAWINGS

FIG. 1 is a schematic partial exploded perspective view of a light emission device according to an exemplary embodiment of the present invention.

FIG. 2 is a schematic partial sectional view of the light emission device according to the exemplary embodiment of the present invention.

FIG. 3 is a graph showing current density vs. luminance characteristics according to an exemplary embodiment of the present invention.

FIG. 4 is a graph showing current density vs. lifetime (or lifespan) of electron region characteristics according to exemplary embodiments of the preset invention.

FIG. 5 is a schematic partial enlarged view of an electron emission unit shown in FIG. 2.

FIG. 6 is a schematic exploded perspective view of a display device according to an exemplary embodiment of the present invention.

FIG. 7 is a schematic partial sectional view of a display panel shown in FIG. 6.

## DETAILED DESCRIPTION OF THE EMBODIMENTS

In the following detailed description, only certain exemplary embodiments of the present invention are shown and described, by way of illustration. As those skilled in the art would recognize, the invention may be embodied in many different forms and should not be construed as being limited to the embodiments set forth herein. Also, in the context of the present application, when an element is referred to as being "on" another element, it can be directly on the another element or be indirectly on the another element with one or more intervening elements interposed therebetween. Like reference numerals designate like elements throughout the specification.

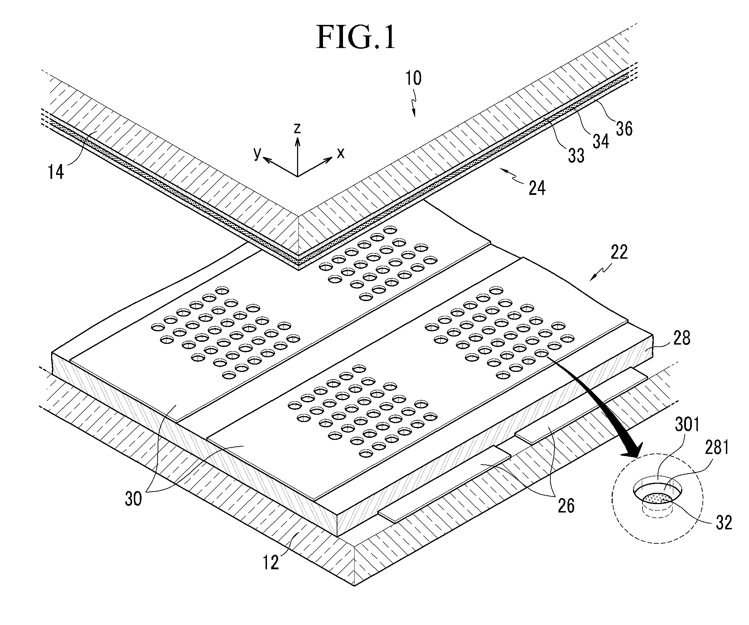

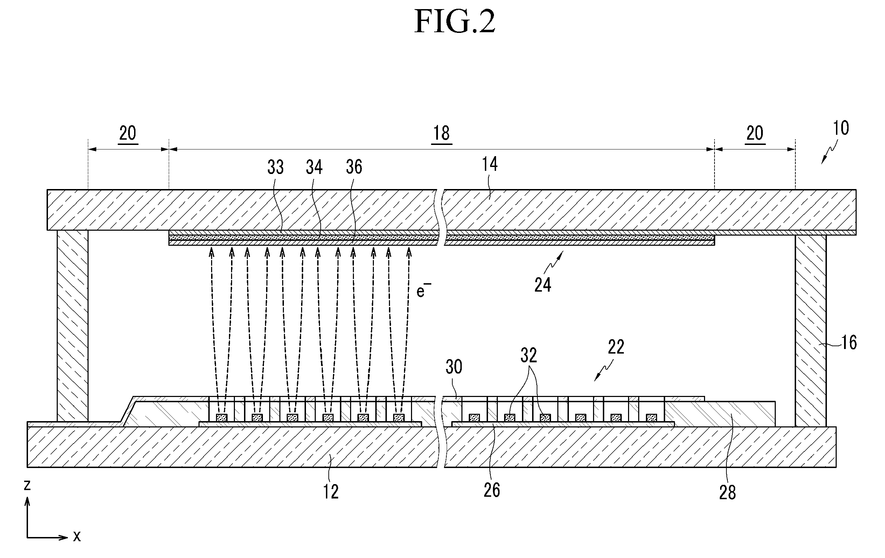

FIG. 1 is a schematic partial exploded perspective view of a light emission device 10 according to an exemplary embodiment of the present invention, and FIG. 2 is a schematic partial sectional view of the light emission device 10.

Referring to FIGS. 1 and 2, the light emission device 10 includes first and second substrates 12 and 14 facing each other with a gap therebetween (or at a set interval or at a predetermined interval). A sealing member 16 is provided at the periphery regions (or peripheries) of the first and second substrates 12 and 14 to seal them together and thus forming a vacuum panel. The interior of the vacuum panel is kept to a degree of vacuum of about $10^{-6}$ Torr.

Inside the sealing member 16, each of the first and second substrates 12 and 14 has an active area 18 for emitting visible light and a non-active area 20 surrounding the active area 18. An electron emission unit 22 for emitting electrons is provided on the first substrate 12 at the active area 18, and a light emission unit 24 for emitting the visible light is provided on the second substrate 14 at the active area 18.

The electron emission unit 22 includes cathode electrodes 26 arranged to extend in a first direction of the first substrate 12, gate electrodes 30 arranged above the cathode electrodes 26 and extending in a second direction crossing the first direction with an insulation layer 28 interposed between the cathode electrodes 26 and the gate electrodes 30, and a plurality of electron emission regions 32 electrically coupled to the cathode electrodes 26.

Among the cathode and gate electrodes 26 and 30, electrodes parallel to the row of the light emission device 10 may be applied with a scan driving voltage to function as scan electrodes and electrodes parallel to the column of the light emission device 10 may be applied with a data driving voltage to function as data electrodes. In FIGS. 1 and 2, it is illustrated that the cathode electrodes 26 are arranged in the column (y-axis direction of drawings) of the light emission device 10 and the gate electrodes 30 are arranged in the row (x-axis direction of drawings) of the light emission device 10.

Openings 301 and openings 281 are formed in the gate electrodes 30 and the insulation layer 28 at crossed regions of the cathode and gate electrodes 26 and 30 to partially expose the surface of the cathode electrodes 26. The electron emission regions 32 are formed on the exposed surface of the cathode electrodes 26 through the openings 281 of the insulation layer 28.

The electron emission regions 32 are formed of a material for emitting electrons when an electric field is applied thereto under a vacuum atmosphere, such as a carbon-based material or a nanometer-sized material. The electron emission regions 32 can be formed of carbon nanotubes, graphite, graphite nanofibers, diamonds, diamond-like carbon, $C_{60}$, silicon nanowires or combinations thereof.

Alternatively, the electron emission regions can be formed to have a tip structure formed of a Mo-based and/or Si-based material.

In the above light emission device 10, one crossed region of the cathode and gate electrodes 26 and 30 may correspond to one pixel region of the light emission device 10. Alternatively, two or more crossed regions of the cathode and gate electrodes 26 and 30 may correspond to one pixel region of the light emission device 10. In the latter case, two or more cathode electrodes 26 and/or two or more gate electrodes 30 that are placed in one pixel region are electrically connected to each other to receive a common driving voltage.

The light emission unit 24 includes an anode electrode 33, a phosphor layer 34 positioned on one surface of the anode electrode 33, and a reflection layer 36 that covers the phosphor layer 34.

The anode electrode 33 is made of a transparent conductive material such as ITO (indium tin oxide) to allow visible light radiated from the phosphor layer 34 to be transmitted therethrough. The anode electrode 33 that is an acceleration electrode for pulling electron beams receives a positive direct current (DC) voltage (anode voltage) higher than several thousand volts to maintain the phosphor layer 34 to be in a high potential state.

The phosphor layer 34 may be made of mixed phosphors of red, green, and blue phosphors to collectively emit white light. The phosphor layer 34 may be disposed on the entire active area 18 of the second substrate 14 or may be separately disposed for each pixel area. In FIG. 1 and FIG. 2, it is illustrated that the phosphor layer 34 is disposed on the entire active area 18 of the second substrate 14.

The reflection layer 36 may be formed of a thin aluminum layer with a thickness about several thousand A, and includes tiny holes for transmitting the electron beams. The reflection layer 36 reflects visible light, which is emitted toward the first substrate 12 among the visible lights emitted from the phosphor layers 34, back to the second substrate 14 to increase luminance of the light emission device 10.

In one embodiment, the anode electrode 33 may be eliminated (or not be provided). Instead, the reflection layer 36 receives the anode voltage to function as the anode electrode.

Spacers for supporting against compression force of the vacuum panel and maintaining a gap between the first and second substrates 12 and 14 are disposed in the active area 18 between the first substrate 12 and the second substrate 14.

The above light emission device 10 applies a scan driving voltage to either the cathode electrodes 26 or the gate electrodes 30, applies a data driving voltage to the other electrodes, and applies the anode voltage that is greater than several thousand volts to the anode electrode 33.

As such, electric fields are formed around the electron emission regions 32 in pixels where a voltage difference between the cathode electrode 26 and the gate electrode 30 is greater than a threshold value, and electrons are emitted therefrom. The emitted electrons are pulled by the anode voltage applied to the anode electrode 33 to collide with the corresponding phosphor layer 34, thereby causing light emission. Luminance of the phosphor layer 34 for each pixel corresponds to the electron emission currents of the corresponding pixel.

In the above light emission device 10, the first and second substrates 12 and 14 are disposed with a relatively large distance of between about 5mm and 20mm. Due to this large distance between the first and second substrates 12 and 14, the arc discharge can be suppressed and the high voltage stability can be enhanced. Therefore, a high voltage that is above 10kV, in one embodiment, between about 10kV and about 15kV, can be applied to the anode electrode 33. Since the luminance of the light emission device 10 is proportional to the anode voltage, the luminance can be effectively improved by the anode voltage.

In the embodiment, the total area of the electron emission regions 32 with respect to the active area 18 of the first substrate 12 of the light emission device 10 is determined in view of luminance, lifetime (or lifespan) of the electron emission regions 32, and the manufacturing process, as follows.

First, a minimum value of the total area occupied by the electron emission regions 32 on the active area 18 of the first substrate 12 may be determined by considering the luminance and the lifetime of the electron emission regions 32.

As an example, the light emission device can be utilized as a back light (or a light source) display device, in a display panel that shows an image( for example, a liquid crystal display panel), and the display panel produces a maximum luminance of 500 cd/m$^2$. Here, since the transmissivity of the liquid crystal display panel is about 5%, the luminance of the light emission device 10 should reach a maximum value of 10,000 cd/m$^2$. For this luminance, a current density (or amount of electron emission) between about 5 and about 6 $\mu$A/cm$^2$ should be generated from the electron emission region 32.

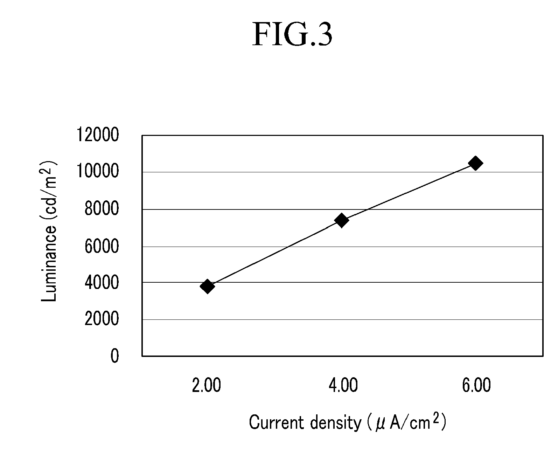

FIG. 3 is a graph that shows a change of luminance according to current density in an exemplary embodiment of the present invention.

Referring to FIG. 3, it can be derived that the current density is proportional to the luminance, and a luminance between about 9000 and about 10,500 cd/m$^2$ is represented at a current density between about 5 and about 6 $\mu$A/cm$^2$.

Here, in one embodiment, the light emission device 10 is a peak driving type that instantly emits electrons using scan driving and data driving voltages of a pulse wave. Thus, for producing a luminance of 10,000 cd/m$^2$, a current density of about 10 $\mu$A/cm$^2$ is needed, and this current density is about twice the current density having the value between about 5 and about 6 $\mu$A/cm$^2$ mentioned above.

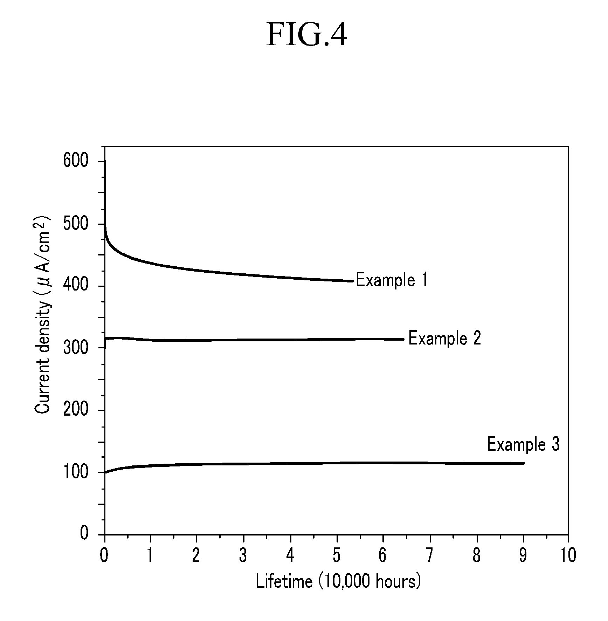

FIG. 4 is a graph that shows a characteristic of a lifetime of an electron emission region according to current density in exemplary embodiments of the present invention.

In FIG. 4, Example 1 is measured at an initial current density of 600 $\mu$A/cm$^2$, Example 2 is measured at an initial current density of 300 $\mu$A/cm$^2$, and Example 3 is measured at an initial current density of 100 $\mu$A/cm$^2$.

All examples represent lifetimes of 50,000 hours, and the maximum current density that is capable of providing 50,000 hour lifetimes can be determined from FIG. 4.

Accordingly, when considering characteristics of luminance and lifetime, a minimum value of a total area occupied by the electron emission regions 32 on the active area 18 of the first substrate 12 is (10 $\mu$A/cm$^2$)/(500 $\mu$A/cm$^2$), which is 0.02, and this refers to 2% of the active area 18. As such, in one embodiment of the present invention, when the total area is more than 2%, it is possible for a maximum luminance of about 10,000 cd/m$^2$ and lifetimes of 50,000 hours to be assured.

Next, a maximum of the total area may be determined with respect to the manufacturing processes.

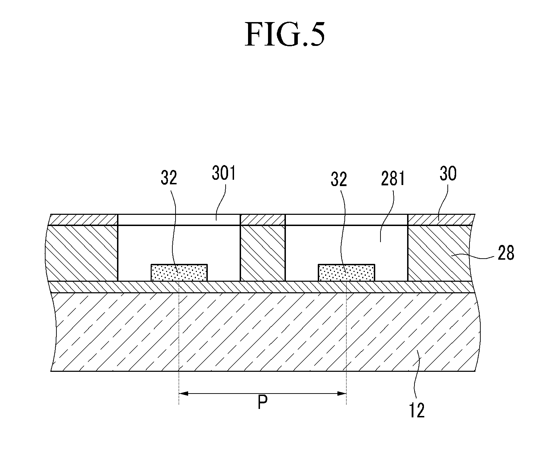

FIG. 5 is a partial enlarged view of an electron emission unit shown in FIG. 2.

Referring to FIG. 5, under the current manufacturing process of an electron emission unit, manufacturing limitations of a diameter of the opening 301 of the gate electrode, a diameter of the electron emission region 32, and a pitch (refer to P in FIG. 5) of the openings 301 and 281 of the gate electrode 301 and the insulating layer 28 are 60, 40, and 80 $\mu$m, respectively. In view of the above, a maximum area of the electron emission regions 32 on an area with a 10mm length and width, respectively, is (area of electron emission region) $\times$ (the number), and it is calculated as 27.75 mm$^2$ by the following formula.

$$(\pi\ (0.02)^2)\times((10/0.08)\times(10/0.08)\times1.414)=27.75\text{mm}^2$$

Here, when dead spaces between the cathode electrodes 26 and the gate electrodes 30 are about 5% of the active area 18, an area capable of forming the electron emission regions 32 in the active area 18 is about 26%. Thus, a total area of the electron emission regions 32 occupied in the light emission device 10 of the embodiment is less than 26% of the active area 18.

In this manner, a total area of the electron emission regions 32 in the light emission device 10 according to an embodiment of the present invention is derived to be between about 2 to about 26% of the active area 18.

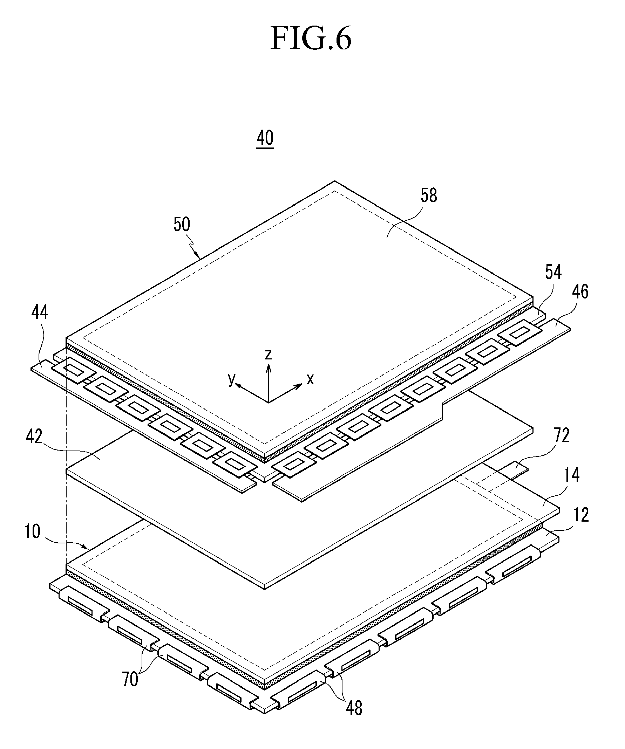

FIG. 6 is an exploded perspective view of a display device 40 according to an embodiment of the present invention.

Referring to FIG. 6, the display device 40 includes a light emission device 10 and a display panel 50 disposed in front of the light emission device 10. A light diffuser 42 for uniformly diffusing the light emitted from the light emission device 10 toward the display panel 50 may be disposed between the display panel 50 and the light emission device 10. The light diffuser 42 may be spaced apart from the light emission device 10 by a set (or predetermined) distance.

The display panel 50 may be a liquid crystal display panel or other non-self emissive display panels. In the following description, the liquid crystal display panel is exemplified.

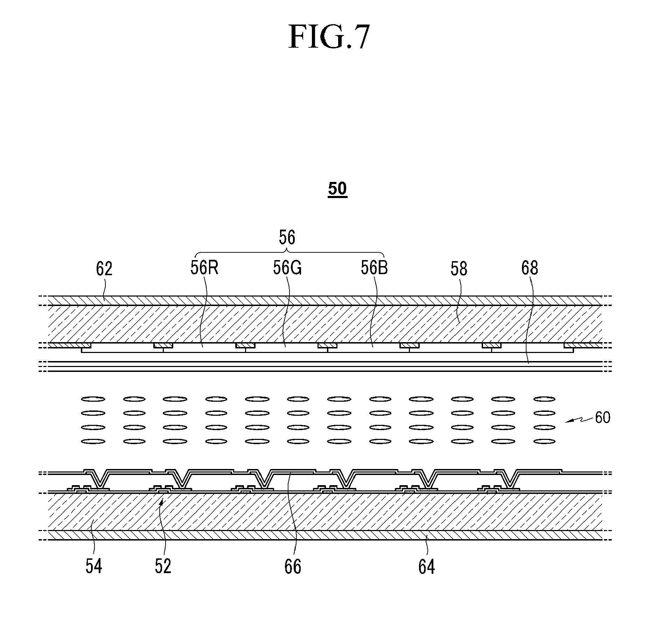

FIG. 7 is a partial sectional view of the display panel 50 shown in FIG. 6.

Referring to FIG. 7, the display panel 50 includes a lower substrate 54 with a plurality of thin film transistors (TFTs) 52 formed thereon, an upper substrate 58 with color filter layers 56 formed thereon, and a liquid crystal layer 60 injected between the lower and upper substrates 54 and 58. Polarizers 62 and 64 are attached on an upper surface of the upper substrate 58 and a lower surface of the lower substrate 54, respectively, to polarize light that passes through the display panel 50.

Transparent pixel electrodes 66 configured to be driven by the TFTs 52 at the sub-pixels are positioned on an inner surface of the lower substrate 54 facing the upper substrate 58, and the color filter layers 56 and a transparent common electrode 68 are positioned on an inner surface of the upper substrate 58 facing the lower substrate 54. The color filter layers 56 include a red filter layer 56R, a green filter layer 56G, and a blue filter layer 56B that are positioned one by one at each sub-pixel.

When a TFT 52 of a particular sub-pixel is turned on, an electric field is formed between the pixel electrodes 66 and the common electrode 68, an arrangement angle of liquid crystal molecules changes due to the electric field, and light transmittance varies according to the changed arrangement angle. As such, luminance and light emission color of each pixel in the display panel 50 can be controlled through the above referenced process.

Referring again to FIG. 6, reference numeral 44 denotes a scan circuit board assembly that transmits a scan signal to gate electrodes of the TFTs 52, and reference numeral 46 denotes a data circuit board assembly that transmits a data drive signal to source electrodes of the TFTs 52.

The light emission device 10 includes a smaller number of pixels than that of the display panel 50 so that one pixel of the light emission device 10 corresponds (or matches) to two or more pixels of the display panel 50. Each pixel of the light emission device 10 may emit light to correspond to the highest gray level among gray levels of the corresponding pixels of the display panel 50, and may express gray levels corresponding to a grayscale between 2-bit and 8-bit.

For the sake of convenience, the pixels of the display panel 50 will be referred to as first pixels, those of the light emission device 10 will be referred to as second pixels, and the first pixels corresponding to a single second pixel will be referred to as a first pixel group.

The driving process of the light emission device 10 may include ① detecting, by a signal controller that controls the display panel 50, the highest gray level of the gray levels of the first pixels constituting the first pixel group, ② calculating a gray level required for light emission of the corresponding second pixel according to the detected gray level and converting the same into digital data, ③ generating a driving signal of the light emission device 10 by utilizing the digital data, and ④ applying the generated driving signal to driving electrodes of the light emission device 10.

The driving signal of the light emission device 10 includes a scan driving signal and a data driving signal. Either the cathode electrodes 26 or the gate electrodes 30 (e.g., the gate electrodes 30) receive the scan driving signal, and the other electrodes (e.g., the cathode electrodes 26) receive the data drive signal.

The scan circuit board assembly and the data circuit board assembly for driving the light emission device 10 may be positioned on a rear side of the light emission device 10. In FIG. 6, reference numeral 48 denotes first connectors that connect the cathode electrodes and the data circuit board assembly, and reference numeral 70 denotes second connectors that connect the gate electrodes and the scan circuit board assembly. Reference numeral 72 denotes a third connector for applying an anode voltage to the anode electrode.

When an image is displayed at a corresponding first pixel group, the second pixel of the light emission device 10 is synchronized (e.g., individually or independently synchronized) with the corresponding first pixel group and emits light with a certain gray level. As such, the light emission device 10 can provide light of a high luminance to a brighter region of a screen image implemented by the display panel 50 and provides light of a low luminance to a darker region of the screen image. Accordingly, the display device 40 can increase the contrast ratio of the screen and implement sharp picture quality.

**Claims**

1. A light emission device (10) comprising:

    first and second substrates (12, 14) facing each other with a gap therebetween;
    cathode electrodes (26) on the first substrate (12) and extending in a first direction;
    gate electrodes (30) above the cathode electrodes (26) and extending in a second direction crossing the first direction with an insulation layer (28) interposed between the cathode electrodes (26) and the gate electrodes (30);
    a plurality of electron emission regions (32) electrically coupled to the cathode electrodes (26); and
    a light emission unit (24) on the second substrate (14) and comprising an anode electrode (33) and a phosphor layer (34),

    wherein:

    the first substrate (12) has an active area (18) and a non-active area (20) surrounding the active area (18); and
    a total area of the electron emission regions (32) on the first substrate (12) is between about 2 and about 26% of the active area (18).

2. The light emission device (10) of claim 1, wherein the gap between the first and second substrates (12, 14) is between about 5 and about 20mm.

3. The light emission device (10) of claim 1, wherein the anode electrode (33) receives an anode voltage between about 10 and about 15kV.

**4.** The light emission device (10) of claim 1, wherein:

the gate electrodes (30) and the insulation layer (28) have openings (301, 281) to partly expose a surface of the cathode electrodes (26); and
the electron emission regions (32) are on the exposed surface of the cathode electrodes (26) through the openings (301, 281).

**5.** The light emission device (10) of claim 4, wherein a diameter of each of the openings (301, 281) is about 60 μm or more, a diameter of each of the electron emission regions (32) is about 40 μm or more, and a pitch of the electron emission regions (32) is about 80 μm or more.

**6.** A display device (40) comprising:

a display panel (50) for displaying an image; and
a light emission device (10) for emitting light toward the display panel (50),

wherein, the light emission device (10) comprises:

first and second substrates (12, 14) facing each other with a gap therebetween;
cathode electrodes (26) on the first substrate (12) and extending in a first direction;
gate electrodes (30) above the cathode electrodes (26) and extending in a second direction crossing the first direction with an insulation layer (28) interposed between the cathode electrodes (26) and the gate electrodes (30);
a plurality of electron emission regions (32) electrically coupled to the cathode electrodes (26); and
a light emission unit (24) on the second substrate (14) and comprising an anode electrode (33) and a phosphor layer (34),

wherein:

the first substrate (12) has an active area (18) and a non-active area (20) surrounding the active area (18); and
a total area of the electron emission regions (32) on the first substrate (12) is between about 2 and about 26% of the active area (18).

**7.** The display device (40) of claim 6, wherein the gap between the first and second substrates (12, 14) is between about 5 and about 20mm.

**8.** The display device (40) of claim 6, wherein the anode electrode (33) receives an anode voltage between about 10 and about 15kV.

**9.** The display device (40) of claim 6, wherein:

the gate electrodes (30) and the insulation layer (28) have openings (301, 281) to partly expose a surface of the cathode electrodes (26); and
the electron emission regions (32) are on the exposed surface of the cathode electrodes (26) through the openings (301, 281).

**10.** The display device (40) of claim 9, wherein a diameter of each of the openings (301, 281) is about 60 μm or more, a diameter of each of the electron emission regions (32) is about 40 μm or more, and a pitch of the electron emission regions (32) is about 80 μm or more.

**11.** The display device (40) of claim 6, wherein:

the display panel (50) comprises first pixels;
the light emission device (10) comprises second pixels;
the second pixels are less in number than the first pixels; and
a luminance of each of the second pixels is independently controlled in response to a highest gray level among gray levels of corresponding ones of the first pixels.

**12.** The display device (40) of claim 6, wherein the display panel (50) is a liquid crystal display panel.

# FIG.1

# FIG.2

EP 2 063 453 A1

# FIG.3

# FIG.4

# FIG.5

# FIG.6

40

50

58

44

54

46

z

y      x

42

72

14

10

12

70

48

# FIG.7

**50**

56

62     56R     56G     56B     58     68

60

54     52     66     64

Europäisches
Patentamt

European
Patent Office

Office européen
des brevets

# EUROPEAN SEARCH REPORT

Application Number

EP 08 16 9420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 100 759 413 B1 (SAMSUNG SDI CO LTD [KR]) 20 September 2007 (2007-09-20) * abstract * | 1-12 | INV. H01J63/02 |
| X,P | -& US 2008/030124 A1 (RYU KYUNG-SUN [KR]) 7 February 2008 (2008-02-07) * abstract * * paragraphs [0010], [0012], [0024] - [0026], [0039], [0049], [0050], [0056] - [0061] * * figures 1,2,4,5 * | 1-12 | ADD. H01J61/30 |
| A | US 2005/029924 A1 (OKAI MAKOTO [JP] ET AL) 10 February 2005 (2005-02-10) * abstract * * paragraphs [0001], [0003], [0006], [0065] - [0067] * * figures 11,15-17 * | 1-12 | |
| A | WO 01/99146 A (DU PONT [US]; BOUCHARD ROBERT JOSEPH [US]; CHENG LAP TAK ANDREW [US];) 27 December 2001 (2001-12-27) * page 23, lines 15-32 * * figure 11 * | 1 | TECHNICAL FIELDS SEARCHED (IPC) H01J |
| A | US 2005/073234 A1 (TAKEUCHI YUKIHISA [JP] ET AL) 7 April 2005 (2005-04-07) * paragraph [0130] * * figures 1-3 * | 1 | |

The present search report has been drawn up for all claims

| Place of search | Date of completion of the search | Examiner |
|---|---|---|
| The Hague | 19 March 2009 | Gijsbertsen, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 9420

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2009

| Patent document cited in search report | | Publication date | Patent family member(s) | | Publication date |
|---|---|---|---|---|---|
| KR 100759413 | B1 | 20-09-2007 | CN<br>US | 101118832 A<br>2008030124 A1 | 06-02-2008<br>07-02-2008 |
| US 2008030124 | A1 | 07-02-2008 | CN | 101118832 A | 06-02-2008 |
| US 2005029924 | A1 | 10-02-2005 | JP<br>KR | 2005056604 A<br>20050016177 A | 03-03-2005<br>21-02-2005 |
| WO 0199146 | A | 27-12-2001 | AU<br>BR<br>CN<br>EP<br>HK<br>JP<br>JP | 7133901 A<br>0112191 A<br>1447978 A<br>1356489 A2<br>1059499 A1<br>2004504690 T<br>2008027919 A | 02-01-2002<br>20-05-2003<br>08-10-2003<br>29-10-2003<br>01-08-2008<br>12-02-2004<br>07-02-2008 |
| US 2005073234 | A1 | 07-04-2005 | NONE | | |